# EUROPÄISCHE PATENTSCHRIFT

(11) **EP 3 503 042 B1**
(45) Veröffentlichungstag und Bekanntmachung des Hinweises auf die Patenterteilung: **10.11.2021**
(21) Anmeldenummer: 18211886.9
(22) Anmeldetag: 12.12.2018
(51) Int. Cl.: G07C 5/08, G01P 1/12, G01P 3/486, G07C 7/00

(54) **VORRICHTUNG ZUM AUFZEICHNEN EINER BEWEGUNGSABHÄNGIGEN GRÖSSE EINES KRAFTFAHRZEUGS**
DEVICE FOR RECORDING A MOTION-DEPENDENT VALUE OF A MOTOR VEHICLE
DISPOSITIF D'ENREGISTREMENT D'UNE GRANDEUR DÉPENDANT DU MOUVEMENT D'UN VÉHICULE AUTOMOBILE

(30) Priorität: 20.12.2017 DE 102017223389
(43) Veröffentlichungstag der Anmeldung: 26.06.2019
(73) Patentinhaber: Continental Automotive GmbH, 30165 Hannover (DE)
(72) Erfinder: Jacobi, Hartmut, 78078 Niedereschach (DE)
(74) Vertreter: Continental Corporation

(56) Entgegenhaltungen:
- EP-A1- 2 664 899
- DE-A1- 2 730 737
- DE-A1- 3 022 964
- DE-A1-102010 042 142
- DE-U1-202007 002 211

## Beschreibung

Die Erfindung bezieht sich auf eine Vorrichtung zum Aufzeichnen einer bewegungsabhängigen Größe eines Kraftfahrzeugs mit einem Aufzeichnungsgerät und mit einem mit dem Aufzeichnungsgerät verbundenen Bewegungssensor, wobei der Bewegungssensor eine Drehbewegung eines Geberrades erfasst.

Eine vorgenannte Vorrichtung ist bekannt von einem Aufzeichnungsgerät, das ein Fahrtschreiber ist, und einem mit dem Aufzeichnungsgerät verbundenen Bewegungssensor. Die Vorrichtung ist in ein Kraftfahrzeug eingebaut und zeichnet zumindest eine bewegungsabhängige Größe des Kraftfahrzeugs, beispielsweise eine Information darüber, ob und zu welchen Zeiten das Kraftfahrzeug fährt, und/oder zum Beispiel eine Fahrgeschwindigkeit des Kraftfahrzeugs, auf. Der Bewegungssensor erfasst eine Drehbewegung eines Geberrades, dessen Drehbewegung mit eine Bewegung des Kraftfahrzeugs korrespondiert, so dass die Drehbewegung des Geberrades Informationen über eine Bewegung des Kraftfahrzeugs liefert. Das Aufzeichnungsgerät ermittelt aus der von dem Bewegungssensor erfassten Drehbewegung die bewegungsabhängige Größe und zeichnet diese auf. Um eine zuverlässige Nachweisbarkeit der Bewegung des Kraftfahrzeugs zu gewährleisten, ist es von Bedeutung, grundsätzlich vorstellbaren Manipulationsversuchen an der Vorrichtung zu begegnen.

Aus DE 30 22 964 A1 ist ein Wegstreckensignalerzeuger für Fahrzeuge mit einer drehbar in einem Gehäuse gelagerten Welle und mit einem an der Welle befestigten Drehteil zur Erzeugung eines einer Umdrehung des Drehteils entsprechenden Wegstreckensignals bekannt. Um die Welle sind auf einer Fläche des Drehteils abwechselnd einem Paar optischer Leitungen zur Aussendung eines Lichtstrahls und zur optischen Abtastung gegenüberliegend reflektierende und nicht reflektierende Abschnitte angeordnet. Der Wegstreckensignalerzeuger kann an einem Taxameter angebracht sein.

Ein Messwertgeber zum Erhalt einer Positionsinformation mit einer Maßverkörperung, die mit einer Sende-/Empfangseinheit des Messwertgebers abtastbar ist und die Hologramme umfasst, ist aus EP 2 664 899 A1 bekannt. Die Sende-/Empfangseinheit umfasst zur optischen Abtastung der Hologramme eine Strahlquelle und einen Detektor.

Eine Einrichtung zur Weg- und Geschwindigkeitsmessung eines Kraftfahrzeugs mit einem ein rotierendes Element abtastenden photoelektrischen Geber mit einem photoelektrischen Element und mit einer Lichtquelle ist aus DE 27 30 737 A1 bekannt. Dieses Dokument offenbart den Oberbegriff des Anspruchs 1.

Aufgabe der Erfindung ist es, eine Vorrichtung der eingangs genannten Art zu schaffen, die eine verbesserte Manipulationssicherheit aufweist.

Diese Aufgabe wird erfindungsgemäß mit einer Vorrichtung nach Anspruch 1 gelöst.

Von besonderem Vorteil bei der erfindungsgemäßen Vorrichtung ist das Vorsehen des optischen Sensors in Verbindung mit der Oberflächenstruktur, die eine optisch erfassbare Oberflächenstruktur ist, des Geberrades sowie der Beleuchtungseinrichtung zur gezielten Beleuchtung des Geberrades. Dadurch sind unter anderem bewusst herbeigeführte Störungen mithilfe eines äußeren Magnetfeldes, wie sie zum Beispiel bei Induktivgebern und bei Vorliegen manipulativer Absicht grundsätzlich denkbar sind, ausgeschlossen. Eine mögliche Manipulation eines Sensorsignals des Bewegungssensors wird mit der Erfindung wesentlich erschwert.

Insbesondere weist ein Kraftfahrzeug die erfindungsgemäße Vorrichtung auf. Das Aufzeichnungsgerät und der Bewegungssensor sind vorzugsweise in das Kraftfahrzeug eingebaut. Das Aufzeichnungsgerät ist vorzugsweise ein Fahrtenschreiber. Die Beleuchtung der Oberflächenstruktur des Geberrades kann insbesondere mit Infrarotlicht erfolgen, das heißt das Licht der Beleuchtungseinrichtung ist in diesem Fall Infrarotlicht.

Zusätzliche vorteilhafte Weiterbildungen der Erfindung sind in den Unteransprüchen angegeben.

Es ist zum Beispiel denkbar, dass das Geberrad an einem Radlager des Kraftfahrzeugs angeordnet ist.

Gemäß der Erfindung ist eine Steuereinrichtung vorhanden, und die Steuereinrichtung ist derart ausgebildet, dass das Licht der Beleuchtungseinrichtung zur Beleuchtung der Oberflächenstruktur bezüglich Polarisation und/oder Wellenlänge des Lichts von der Steuereinrichtung gesteuert wird. Durch die gezielte Steuerung der Polarisation und/oder Wellenlänge des Lichts ist es zum Beispiel möglich, das von der Oberflächenstruktur des Geberrades reflektierte Licht hinsichtlich dieser Parameter zu beurteilen und so die Manipulationssicherheit weiter zu erhöhen.

Von besonderem Vorteil ist, dass gemäß der Erfindung die Steuereinrichtung einen Zufallsgenerator aufweist und dass die Steuereinrichtung derart ausgebildet ist, dass die Polarisation und/oder Wellenlänge des Lichts in Abhängigkeit von dem Zufallsgenerator gesteuert wird. Somit wird die Polarisation und/oder Wellenlänge des Lichts zufällig gesteuert. Da nur der Steuereinrichtung die Steuerung der Polarisation und/oder Wellenlänge des Lichts bekannt ist, ist ein manipulativer Eingriff von außen nahezu ausgeschlossen.

Gemäß einer vorteilhaften Weiterbildung der Erfindung ist die Steuereinrichtung derart ausgebildet, dass das von der Steuereinrichtung gesteuerte Licht der Beleuchtungseinrichtung zur Beleuchtung der Oberflächenstruktur mit dem von der Oberflächenstruktur reflektierten Licht von der Steuereinrichtung verglichen wird. Damit nimmt die Steuereinrichtung, welche die Steuerung des Lichts vornimmt, auch einen Vergleich mit dem reflektierten Licht vor, so dass durch den Verzicht auf - gegebenenfalls selbst manipulierbare - zusätzliche Einrichtungen der Manipulationsschutz weiter erhöht wird. Sowohl eine Vermeidung einer Manipulation eines Sensorsignals des Bewegungssensors als auch eine Erkennung einer möglichen Manipulation des Sensorsignals werden mit der Erfindung erheblich verbessert. Beispielsweise im Falle einer ein Hologramm aufweisenden Oberflächenstruktur des Geberrades kann die Steuereinrichtung zum Beispiel durch Wahl eines geeigneten elektromagnetischen Signals und/oder Infrarotsignals auf quasizufällige Art und Weise eine von mehreren in dem Hologramm vorkommenden, der Steuereinrichtung bekannten Strukturen auswerten, beispielsweise durch Kreuzkorrelation; die Wahl eines zufälligen Abtastzeitpunktes führt zu einer weiter erhöhten Manipulationssicherheit.

Einer vorteilhaften Weiterbildung der Erfindung entsprechend ist die Steuereinrichtung derart ausgebildet, dass bei einem Unterschied des gesteuerten Lichts und des reflektierten Lichts ein Fehlersignal erzeugt wird. Insbesondere kann die Steuereinrichtung derart ausgebildet sein, dass bei einem Unterschied der Polarisation und/oder Wellenlänge des gesteuerten Lichts und der Polarisation beziehungsweise Wellenlänge des reflektierten Lichts das Fehlersignal erzeugt wird. Das Fehlersignal wird vorzugsweise an das Aufzeichnungsgerät gesendet. Das Aufzeichnungsgerät kann das Fehlersignal insbesondere aufzeichnen, zum Beispiel in einem Datenspeicher speichern, und/oder, beispielsweise mittels einer optischen Anzeigevorrichtung wie einem Display, anzeigen.

Gemäß einer anderen vorteilhaften Weiterbildung der Erfindung ist die Steuereinrichtung Bestandteil des Aufzeichnungsgeräts. Damit kann in einfacher Weise ein hoher Manipulationsschutz des Aufzeichnungsgeräts auch für die Steuereinrichtung genutzt werden.

Einer anderen vorteilhaften Weiterbildung der Erfindung entsprechend weist der Bewegungssensor ein Lichtauskoppelelement der Beleuchtungseinrichtung und ein Lichtaufnahmeelement auf. Dadurch kann der Sensor sehr kompakt sein. Der Sensor kann zum Beispiel in der Art eines Endoskops aufgebaut sein. Das Lichtauskoppelelement des Sensors dient zum Abstrahlen des Lichts zur Beleuchtung der Oberflächenstruktur des Geberrades. Das Lichtaufnahmeelement des Sensors dient zum Aufnehmen des von der Oberflächenstruktur reflektierten Lichts. Beispielsweise kann das Lichtaufnahmeelement einen CCD-Chip (CCD: charge-coupled device (ladungsgekoppeltes Bauelement)) aufweisen. Zum Beispiel im Zusammenhang mit einer Anordnung des Geberrades in einem Fahrzeuggetriebe könnte der Bewegungssensor ebenfalls im Fahrzeuggetriebe angeordnet sein. Gemäß einer vorteilhaften Weiterbildung der Erfindung hingegen ist der Bewegungssensor geeignet, in einem Getriebegehäuse des Fahrzeuggetriebes angeordnet zu sein. Damit ist der Sensor einerseits besonders gut geschützt, aber andererseits dennoch beispielsweise für Montagezwecke zugänglich.

Gemäß einer vorteilhaften Weiterbildung der Erfindung weist die Beleuchtungseinrichtung eine außerhalb des Bewegungssensors angeordnete Lichterzeugungsvorrichtung und ein in dem Bewegungssensor angeordnetes Lichtauskoppelelement auf. Die Lichterzeugungsvorrichtung ist beispielsweise mittels eines Lichtleiters mit dem Lichtauskoppelelement verbunden. Zum Beispiel kann das Lichtauskoppelelement von einem Ende des Lichtleiters gebildet werden, nämlich von einem der Lichterzeugungsvorrichtung abgewandten Ende des Lichtleiters.

Eine andere vorteilhafte Weiterbildung der Erfindung sieht vor, dass eine Bildaufnahmeeinrichtung vorhanden ist, wobei die Bildaufnahmeeinrichtung das Lichtaufnahmeelement und eine Bildverarbeitungseinrichtung aufweist. Das Lichtaufnahmeelement kann zum Beispiel eine Optik und/oder einen CCD-Chip aufweisen. Die Bildverarbeitungseinrichtung, beispielsweise eine Bildauswerte- und/oder Bildbearbeitungselektronik, kann zum Beispiel in der Steuereinrichtung angeordnet und/oder Bestandteil der Steuereinrichtung sein.

Eine zusätzlich erhöhte Manipulationssicherheit kann erreicht werden, wenn gemäß einer anderen vorteilhaften Weiterbildung der Erfindung die Lichterzeugungsvorrichtung und/oder die Bildverarbeitungseinrichtung Bestandteil des Aufzeichnungsgeräts ist.

Die Oberflächenstruktur des Geberrades könnte zum Beispiel eine Anordnung von Spiegelflächen oder beispielsweise ein aufgedrucktes zweidimensionales Bild aufweisen. Gemäß einer anderen vorteilhaften Weiterbildung der Erfindung hingegen weist die Oberflächenstruktur des Geberrades ein Hologramm und/oder eine mechanische Struktur auf. Die mechanische Struktur ist in die Oberfläche des Geberrades eingebracht, zum Beispiel in die Oberfläche geätzt oder geschliffen, und/oder auf die Oberfläche aufgebracht. Beispielsweise kann die mechanische Struktur Rillen und/oder Riefen in der Oberfläche des Geberrades aufweisen. Im Falle eines Hologramms ersetzt eine holografische Struktur des Geberrades beispielsweise einen Zahnkranz eines mit einem als Induktivgeber ausgebildeten Bewegungssensor korrespondierenden, als Zahnrad ausgebildeten Geberrades.

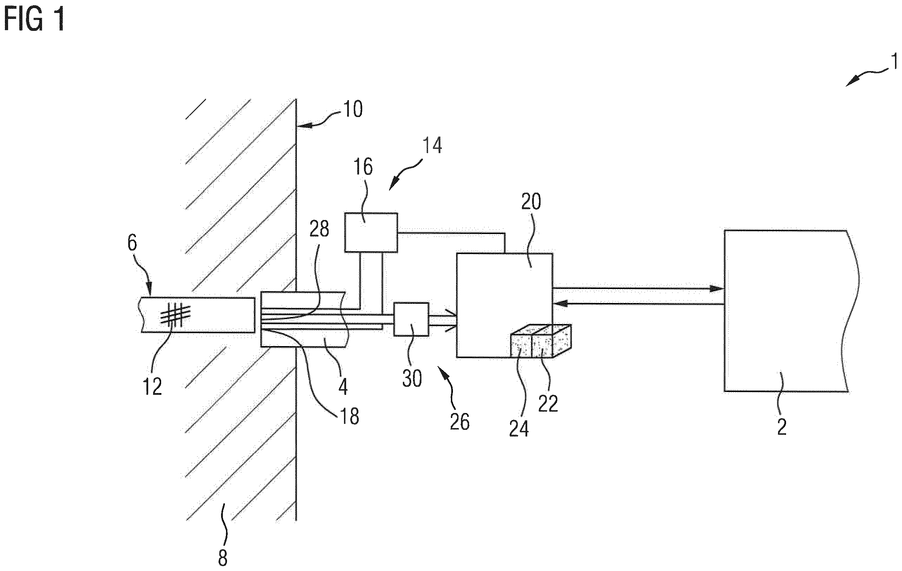

Ausführungsbeispiele der Erfindung werden im Folgenden anhand der beigefügten schematisierten, skizzenhaften Zeichnung näher beschrieben. Es zeigt die
- einzige Figur: eine Vorrichtung zum Aufzeichnen einer bewegungsabhängigen Größe eines Kraftfahrzeugs.

In der einzigen Figur ist in skizzenhafter und schematisierter Darstellung eine Vorrichtung 1 zum Aufzeichnen einer bewegungsabhängigen Größe eines Kraftfahrzeugs gezeigt. Die Vorrichtung 1 weist ein Aufzeichnungsgerät 2 und einen mit dem Aufzeichnungsgerät 2 verbundenen Bewegungssensor 4 auf.

Der Bewegungssensor 4 erfasst eine Drehbewegung eines Geberrades 6. Das Geberrad 6 ist in einem Fahrzeuggetriebe 8 eines hier nicht weiter dargestellten Kraftfahrzeugs angeordnet. Der Bewegungssensor 4, der ein optischer Sensor ist, ist in einem Getriebegehäuse 10 des Fahrzeuggetriebes 8 angeordnet.

Das Geberrad 6 weist eine Oberflächenstruktur 12 auf. Die Oberflächenstruktur 12 ist optisch erfassbar. Die Oberflächenstruktur 12 kann zum Beispiel ein Hologramm und/oder eine - beispielsweise in die Oberfläche des Geberrades geätzte oder geschliffene - mechanische Struktur sein. Ferner ist eine Beleuchtungseinrichtung 14 zur Beleuchtung der Oberflächenstruktur 12 des Geberrades 6 vorhanden.

Die Beleuchtungseinrichtung 14 weist eine außerhalb des Bewegungssensors 4 angeordnete Lichterzeugungsvorrichtung 16 und ein in dem Bewegungssensor 4 angeordnetes Lichtauskoppelelement 18 auf. Der Bewegungssensor 4 ist derart ausgebildet, dass der Bewegungssensor 4 eine Drehbewegung des Geberrades 6 anhand des von der Oberflächenstruktur 12 reflektierten Lichts der Beleuchtungseinrichtung 14 erfasst.

Zudem ist eine Steuereinrichtung 20 vorhanden. Die Steuereinrichtung 20 ist derart ausgebildet, dass das Licht der Beleuchtungseinrichtung 14 zur Beleuchtung der Oberflächenstruktur 12 bezüglich Polarisation und/oder Wellenlänge des Lichts von der Steuereinrichtung 20 gesteuert wird. Dabei weist die Steuereinrichtung 20 einen Zufallsgenerator 22 auf, und die Steuereinrichtung 20 ist ferner dazu ausgebildet, dass die Polarisation und/oder Wellenlänge des Lichts in Abhängigkeit von dem Zufallsgenerator 22 gesteuert wird.

Ein spezielles Ausführungsbeispiel liegt beispielsweise in einem Fall vor, in dem die Oberflächenstruktur 12 ein Hologramm aufweist, wobei das Geberrad 6 je nach Polarisation der Beleuchtung eine in Frequenz und Kontur unterschiedliche Pulsfolge aufweist. Die Steuereinrichtung 20 wertet eine Bildaufnahme in Abhängigkeit einer zufallsgesteuerten Polarisation und/oder Wellenlänge der Beleuchtung aus. Die Auswertung wird verschlüsselt an das Aufzeichnungsgerät 20 übermittelt. Liegt keine Manipulation vor, weist ein Echtzeitsignal des Bewegungssensors 4 keinen Einfluss eines Unterschieds zweier Hologrammkanäle auf.

Weiterhin ist die Steuereinrichtung 20 derart ausgebildet, dass das von der Steuereinrichtung 20 gesteuerte Licht der Beleuchtungseinrichtung 14 zur Beleuchtung der Oberflächenstruktur 12 mit dem von der Oberflächenstruktur 12 reflektierten Licht von der Steuereinrichtung 20 verglichen wird. Dazu weist die Steuereinrichtung 20 hier einen Vergleicher 24 auf.

Ergibt der Vergleich einen Unterschied des gesteuerten Lichts und des reflektierten Lichts, so wird von der Steuereinrichtung 20 ein Fehlersignal erzeugt. Das Fehlersignal wird an das Aufzeichnungsgerät 2 gesendet und dort registriert, das heißt gespeichert, und/oder angezeigt.

Um den Vergleich vornehmen zu können, ist eine Bildaufnahmeeinrichtung 26 vorhanden, die mit der Steuereinrichtung 20 verbunden ist. Die Bildaufnahmeeinrichtung 26 weist ein Lichtaufnahmeelement 28 und eine Bildverarbeitungseinrichtung 30 auf. Das Lichtaufnahmeelement 28, das einem Aufnehmen des von der Oberflächenstruktur 12 des Geberrades 6 reflektierten Lichts dient, ist Bestandteil des Bewegungssensors 4.

## Patentansprüche

1. Vorrichtung (1) zum Auf zeichnen einer bewegungsabhängigen Größe eines Kraftfahrzeugs mit einem Aufzeichnungsgerät (2) und mit einem mit dem Aufzeichnungsgerät (2) verbundenen Bewegungssensor (4), wobei der Bewegungssensor (4) geeignet ist, eine Drehbewegung eines Geberrades (6) zu erfassen, wobei eine Beleuchtungseinrichtung (14) zur Beleuchtung einer Oberflächenstruktur (12) des Geberrades (6) vorhanden ist und wobei der Bewegungssensor (4) ein optischer Sensor und derart ausgebildet ist, dass der Bewegungssensor (4) eine Drehbewegung des Geberrades (6) anhand des von der Oberflächenstruktur (12) reflektierten Lichts der Beleuchtungseinrichtung (14) erfasst, **dadurch gekennzeichnet, dass** eine Steuereinrichtung (20) vorhanden ist und dass die Steuereinrichtung (20) derart ausgebildet ist, dass das Licht der Beleuchtungseinrichtung (14) zur Beleuchtung der Oberflächenstruktur (12) bezüglich Polarisation und/oder Wellenlänge des Lichts von der Steuereinrichtung (20) gesteuert wird, dass die Steuereinrichtung (20) einen Zufallsgenerator (22) aufweist und dass die Steuereinrichtung (20) derart ausgebildet ist, dass die Polarisation und/oder Wellenlänge des Lichts in Abhängigkeit von dem Zufallsgenerator (22) gesteuert wird.

2. Vorrichtung nach Anspruch 1, **dadurch gekennzeichnet, dass** die Steuereinrichtung (20) derart ausgebildet ist, dass das von der Steuereinrichtung (20) gesteuerte Licht der Beleuchtungseinrichtung (14) zur Beleuchtung der Oberflächenstruktur (12) mit dem von der Oberflächenstruktur (12) reflektierten Licht von der Steuereinrichtung (20) verglichen wird.

3. Vorrichtung nach einem der vorhergehenden Ansprüche, **dadurch gekennzeichnet, dass** die Steuereinrichtung (20) derart ausgebildet ist, dass bei einem Unterschied des gesteuerten Lichts und des reflektierten Lichts ein Fehlersignal erzeugt wird.

4. Vorrichtung nach einem der vorhergehenden Ansprüche, **dadurch gekennzeichnet, dass** die Steuereinrichtung (20) Bestandteil des Aufzeichnungsgeräts (2) ist.

5. Vorrichtung nach einem der vorhergehenden Ansprüche, **dadurch gekennzeichnet, dass** der Bewegungssensor (4) ein Lichtauskoppelelement (18) der Beleuchtungseinrichtung (14) und ein Lichtaufnahmeelement (28) aufweist.

6. Vorrichtung nach einem der vorhergehenden Ansprüche, **dadurch gekennzeichnet, dass** der Bewegungssensor (4) geeignet ist, in einem Getriebegehäuse (10) des Fahrzeuggetriebes (8) angeordnet zu sein.

7. Vorrichtung nach einem der vorhergehenden Ansprüche, **dadurch gekennzeichnet, dass** die Beleuchtungseinrichtung (14) eine außerhalb des Bewegungssensors (4) angeordnete Lichterzeugungsvorrichtung (16) und ein in dem Bewegungssensor (4) angeordnetes Lichtauskoppelelement (18) aufweist.

8. Vorrichtung nach einem der vorhergehenden Ansprüche, **dadurch gekennzeichnet, dass** eine Bildaufnahmeeinrichtung (26) vorhanden ist, wobei die Bildaufnahmeeinrichtung (26) das Lichtaufnahmeelement (28) und eine Bildverarbeitungseinrichtung (30) aufweist.

9. Vorrichtung nach einem der vorhergehenden Ansprüche, **dadurch gekennzeichnet, dass** die Lichterzeugungsvorrichtung (16) und/oder die Bildverarbeitungseinrichtung (30) Bestandteil des Aufzeichnungsgeräts (2) ist.

10. Vorrichtung nach einem der vorhergehenden Ansprüche, **dadurch gekennzeichnet, dass** die Oberflächenstruktur (12) des Geberrades (6) ein Hologramm und/oder eine mechanische Struktur aufweist.

## Claims

1. Apparatus (1) for recording a movement-dependent variable of a motor vehicle, having a recording device (2) and having a movement sensor (4) connected to the recording device (2), wherein the movement sensor (4) is suitable for capturing a rotational movement of an encoder wheel (6), wherein an illumination device (14) for illuminating a surface structure (12) of the encoder wheel (6) is present and wherein the movement sensor (4) is an optical sensor and configured such that the movement sensor (4) captures a rotational movement of the encoder wheel (6) on the basis of the light from the illumination device (14) that is reflected by the surface structure (12), **characterized in that** a controller (20) is present and **in that** the controller (20) is configured such that the light from the illumination device (14) for illuminating the surface structure (12) is controlled by the controller (20) with respect to the polarization and/or wavelength of the light, **in that** the controller (20) has a random generator (22) and **in that** the controller (20) is configured such that the polarization and/or wavelength of the light is controlled in dependence on the random generator (22).

2. Apparatus according to Claim 1, **characterized in that** the controller (20) is configured such that the light from the illumination device (14) for illuminating the surface structure (12), which light is controlled by the controller (20), is compared by the controller (20) with the light that is reflected by the surface structure (12) .

3. Apparatus according to either of the preceding claims, **characterized in that** the controller (20) is configured such that an error signal is generated if there is a difference between the controlled light and the reflected light.

4. Apparatus according to one of the preceding claims, **characterized in that** the controller (20) is an integral part of the recording device (2).

5. Apparatus according to one of the preceding claims, **characterized in that** the movement sensor (4) has a light coupling-out element (18) of the illumination device (14) and has a light receiving element (28).

6. Apparatus according to one of the preceding claims, **characterized in that** the movement sensor (4) is suitable for being arranged in a transmission housing (10) of the vehicle transmission (8).

7. Apparatus according to one of the preceding claims, **characterized in that** the illumination device (14) has a light generation apparatus (16) arranged outside the movement sensor (4) and a light coupling-out element (18) arranged in the movement sensor (4).

8. Apparatus according to one of the preceding claims, **characterized in that** an image acquisition device (26) is present, wherein the image acquisition device (26) has the light receiving element (28) and an image processing device (30).

9. Apparatus according to one of the preceding claims, **characterized in that** the light generation apparatus (16) and/or the image processing device (30) are/is an integral part of the recording device (2).

10. Apparatus according to one of the preceding claims, **characterized in that** the surface structure (12) of the encoder wheel (6) has a hologram and/or a mechanical structure.

## Revendications

1. Dispositif (1) permettant d'enregistrer une grandeur dépendant du mouvement d'un véhicule automobile, comprenant un appareil d'enregistrement (2) et un capteur de mouvement (4) relié à l'appareil d'enregistrement (2), le capteur de mouvement (4) étant adapté pour détecter un mouvement de rotation d'une roue codeuse (6), un dispositif d'éclairage (14) étant présent pour éclairer une structure de surface (12) de la roue codeuse (6), et le capteur de mouvement (4) étant un capteur optique et étant réalisé de telle sorte que le capteur de mouvement (4) détecte un mouvement de rotation de la roue codeuse (6) à l'aide de la lumière du dispositif d'éclairage (14), réfléchie par la structure de surface (12),
**caractérisé en ce qu'**un dispositif de commande (20) est présent, et **en ce que** le dispositif de commande (20) est réalisé de telle sorte que la lumière du dispositif d'éclairage (14) pour l'éclairage de la structure de surface (12) est commandée par le dispositif de commande (20) quant à la polarisation et/ou à la longueur d'onde de la lumière, **en ce que** le dispositif de commande (20) présente un générateur de nombres aléatoires (22), et **en ce que** le dispositif de commande (20) est réalisé de telle sorte que la polarisation et/ou la longueur d'onde de la lumière sont commandées en fonction du générateur de nombres aléatoires (22).

2. Dispositif selon la revendication 1, **caractérisé en ce que** le dispositif de commande (20) est réalisé de telle sorte que la lumière du dispositif d'éclairage (14), commandée par le dispositif de commande (20) pour l'éclairage de la structure de surface (12), est comparée par le dispositif de commande (20) à la lumière réfléchie par la structure de surface (12).

3. Dispositif selon l'une quelconque des revendications précédentes, **caractérisé en ce que** le dispositif de commande (20) est réalisé de telle sorte qu'en cas de différence entre la lumière commandée et la lumière réfléchie, un signal d'erreur est généré.

4. Dispositif selon l'une quelconque des revendications précédentes, **caractérisé en ce que** le dispositif de commande (20) fait partie de l'appareil d'enregistrement (2).

5. Dispositif selon l'une quelconque des revendications précédentes, **caractérisé en ce que** le capteur de mouvement (4) présente un élément de découplage de lumière (18) du dispositif d'éclairage (14) et un élément d'absorption de lumière (28).

6. Dispositif selon l'une quelconque des revendications précédentes, **caractérisé en ce que** le capteur de mouvement (4) est adapté pour être disposé dans un carter de boîte de vitesses (10) de la boîte de vitesses de véhicule (8).

7. Dispositif selon l'une quelconque des revendications précédentes, **caractérisé en ce que** le dispositif d'éclairage (14) présente un dispositif de génération de lumière (16) disposé à l'extérieur du capteur de mouvement (4) et un élément de découplage de lumière (18) disposé dans le capteur de mouvement (4).

8. Dispositif selon l'une quelconque des revendications précédentes, **caractérisé en ce qu'**un dispositif de prise de vue (26) est présent, le dispositif de prise de vue (26) présentant l'élément d'absorption de lumière (28) et un dispositif de traitement d'image (30).

9. Dispositif selon l'une quelconque des revendications précédentes, **caractérisé en ce que** le dispositif de génération de lumière (16) et/ou le dispositif de traitement d'image (30) fait/font partie de l'appareil d'enregistrement (2).

10. Dispositif selon l'une quelconque des revendications précédentes, **caractérisé en ce que** la structure de surface (12) de la roue codeuse (6) présente un hologramme et/ou une structure mécanique.
